# DEMANDE DE BREVET EUROPEEN

(11) **EP 1 249 528 A1**
(43) Date de publication de la demande: **16.10.2002**
(21) Numéro de dépôt: 02290770.3
(22) Date de dépôt: 27.03.2002
(51) Int. Cl.: D04H 13/00

(54) **Produit à base de fibres de verre expansées et son procédé de fabrication**

(30) Priorité: 11.04.2001 FR 0104968
(71) Demandeur: Saint-Gobain Vetrotex France, 73000 Chambéry (FR)
(72) Inventeur: Debalme, Jean-Paul, 73000 Chambery (FR); Rocher, Gilles, 73000 Chambery (FR)
(74) Mandataire: Goldenberg, Virginie Isabelle

(57) **Abrégé**

Produit à base de fibres composites continues expansées ayant une tenue mécanique intrinsèque. Les fibres composites consistent en des filaments de verre et en au moins une matière thermoplastique qui sont projetés sous forme d'un volume (20) dans ou sur un élément de réception (10), le volume (20) étant chauffé sur sa surface externe (21).

## Description

L'invention a trait à des produits d'isolation phonique ou thermique constitués à base de fibres de verre continues expansées, et à leur procédé de fabrication consistant à projeter ces fibres sous forme d'un volume dans ou sur un élément de réception.

Il est par exemple connu d'utiliser des fibres de verre continues sous forme expansée pour remplir des éléments de réception tels que des pots d'échappement en vue de leur isolation phonique. Le brevet américain US 4 569 471 décrit d'ailleurs un procédé pour y parvenir, les fibres de verre continues issues d'un fil de roving passent au travers d'une buse dans laquelle est injecté de l'air comprimé afin d'y être séparées puis enchevêtrées et projetées sous forme d'un produit laineux dans l'espace d'accueil.

Le produit laineux tel que décrit dans le brevet américain ci-dessus cité s'avère cependant trop volumineux. Afin d'augmenter sa densité, il a été envisagé de fabriquer des préformes à partir de ce même produit laineux mais rendu plus compact par sa compression. Toutefois, il est nécessaire pour maintenir la forme élaborée des préformes et éviter une éventuelle dislocation des fibres enchevêtrées, d'ajouter un liant. La demande internationale de brevet WO 98/24615 montre ainsi un produit laineux qui est projeté dans un moule, un liant étant pulvérisé soit lors du passage des filaments au travers de la buse, soit sur le produit laineux, la compression du moule et son chauffage en étuve permettant le séchage du produit et la polymérisation du liant.

Le procédé du brevet américain n'introduit aucun liant du fait qu'on réalise le bourrage du logement d'accueil, le produit n'ayant pas à se maintenir en forme de lui même. En revanche, le procédé de la demande internationale utilise un liant pour maintenir en forme le produit car il s'agit de lier entre elles les fibres afin de constituer une préforme.

Ainsi, à partir du produit expansé, il s'avère nécessaire d'associer un liant et de chauffer l'ensemble dans un four pour parvenir à un produit final, qui présente une tenue mécanique indispensable à la conservation de la forme souhaitée. Cependant, l'addition de liant oblige à prévoir un appareil de mise en oeuvre du procédé plus sophistiqué, tel que celui décrit dans la demande internationale de brevet WO 98/25072, qui est notamment doté d'un canal supplémentaire pour l'arrivée du liant et éventuellement d'un autre canal d'arrivée d'eau lorsque ce liant est en poudre, ainsi que de moyens appropriés pour doser de façon adaptée le liant en poudre et l'eau. En outre, une enceinte de chauffage doit être prévue pour sécher le liant et le polymériser.

L'invention a donc pour but un procédé pour l'obtention d'un produit à base de fibres de verre sous forme expansée qui engendre une simplification des moyens de mise en oeuvre, notamment lorsque le produit final voluminisé nécessite une certaine tenue mécanique car n'étant pas obligatoirement destiné à rester confiné dans un logement d'accueil telle qu'une cavité.

Selon l'invention, le produit est à base de fibres composites continues expansées, les fibres consistant en des filaments de verre et en au moins une matière thermoplastique, caractérisé en ce que la matière thermoplastique permet d'assurer la fonction de liant et que les fibres sont issues d'un roving de filaments comêlés de verre et de matière thermoplastique.

Aussi, les fibres issues d'un roving et non directement de filières permettent que le produit puisse être réalisé à n'importe quel endroit, y compris dans des endroits difficiles d'accès, et former le volume exactement désiré en arrêtant au moment voulu le dévidage du roving lors de la projection des fibres.

Selon une caractéristique, la matière thermoplastique peut être une polyoléfine du type polypropylène ou polyéthylène, ou un polyester thermoplastique du type polyéthylènetéréphtalate, ou polybutylènetéréphtalate.

Selon une autre caractéristique, le produit de l'invention peut constituer l'enveloppe d'un autre produit en pur fibres de verre expansées.

Selon l'invention, le procédé consistant à projeter sous forme d'un volume dans ou sur un élément de réception, des filaments à base de verre issus d'au moins une mèche continue, est caractérisé en ce que les filaments projetés consistent en des filaments de verre et en au moins une matière thermoplastique, et en ce que le volume est chauffé sur sa surface externe.

Ainsi, la fonction de liant assurée par les filaments thermoplastiques est activée uniquement par le chauffage en superficie du volume. Il n'y a aucune nécessité d'ajouter, comme dans l'état de la technique, un liant, en poudre par exemple additionné d'eau, au volume fibreux constitué simplement de fibres de verre et d'effectuer une polymérisation du liant par un chauffage relativement long en durée et élevé en température.

Selon une caractéristique, des filaments de verre supplémentaires issus d'une seconde mèche peuvent être projetés avec les filaments de verre et de matière thermoplastique issus de la première mèche composite.

Selon une autre caractéristique, le chauffage est réalisé à proximité de la surface externe du volume, soit par soufflage d'air chaud, soit par rayonnement thermique, ou encore par une flamme.

L'élément de réception peut présenter une forme et des dimensions correspondant à celle du volume à obtenir, et présente alors des parois pourvues d'orifices autorisant le passage d'air chaud pour le chauffage de la surface externe du volume.

Pour éventuellement densifier le matériau remplissant le volume, on peut prévoir une grille métallique destinée à être appliquée contre la surface externe du volume lors de son chauffage.

D'autres caractéristiques et avantages de l'invention apparaîtront dans la description qui suit au regard des dessins annexés sur lesquels :
- la figure 1 est une vue en coupe d'un volume de fibres expansées lors de l'étape de chauffage du procédé ;
- la figure 2 illustre un appareil de projection des fibres.

Le procédé de l'invention consiste à projeter dans un élément de réception 10 des fibres continues à base de verre, et plus particulièrement des fibres de verre et de matière thermoplastique, en vue d'obtenir un volume 20, et à chauffer en surface ledit volume pour réaliser un produit final et de bonne tenue mécanique, c'est-à-dire restant dans la forme qui lui a été imposée.

On entend par élément de réception tout logement d'accueil volumique, ou bien toute surface sur laquelle sont déposées les fibres expansées. L'élément de réception a un rôle d'accueil provisoire en vue de rigidifier par chauffage superficiel le volume de fibres selon une forme particulière.

L'élément de réception 10 peut avoir la forme du produit final à obtenir. Aussi, l'élément comporte des parois 11 qui délimitent les dimensions du produit.

Les parois 11 présentent des orifices 12 qui autorisent le passage de flux d'air chaud lors de l'étape de chauffage superficiel. Les parois sont alors grillagées par exemple. Elles sont avantageusement métalliques pour favoriser l'échange de chaleur avec les filaments et chauffer plus rapidement la surface 21 du volume de fibres.

Lorsque le volume 20 repose sur une surface de réception ou dans l'élément de réception 10 aux parois 11, on peut prévoir une grille métallique 13 destinée à être appliquée sur la surface 21 du volume pour, outre favoriser l'échange de chaleur avec les filaments, comprimer par ailleurs ledit volume si besoin. Une compression du volume pendant le chauffage permet de mieux adapter sa masse volumique, dont dépendent les performances d'isolation phonique et thermique et la tenue mécanique.

Si la surface 21 à chauffer et éventuellement à comprimer est relativement grande, telle que celle d'un volume agencé dans les combles d'une maison, la grille métallique sera de petites dimensions et facilement maniable pour être déplacée sur la totalité de la surface lors du chauffage.

Les filaments de matière thermoplastique jouent le même rôle d'isolant que ceux de verre quant à l'isolation thermique et phonique. Ils sont également utilisés afin d'assurer le rôle local de liant pour permettre la cohésion des fibres du volume et engendrer par l'étape de chauffage superficiel une sorte de membrane poreuse ou peau protectrice qui enveloppe le volume et assure sa tenue mécanique.

Ces filaments de verre et de matière thermoplastique sont issus de préférence d'une mèche composite continue dans laquelle ils sont comêlés, commercialisée sous la marque TWINTEX® par la société SAINT-GOBAIN VETROTEX.

En variante, la mèche composite est constituée d'une multiplicité de filaments de verre, chacun gainé par de la matière thermoplastique.

La matière thermoplastique des filaments projetés peut consister en une polyoléfine, du type polypropylène ou polyéthylène, ou un polyester thermoplastique, du type polyéthylènetéréphtalate, ou polybutylènetéréphtalate.

La projection des filaments est réalisée par exemple à l'aide d'un dispositif portable tel que celui décrit dans la demande FR 01/02991 qui montre un appareil de projection ayant la forme d'un pistolet.

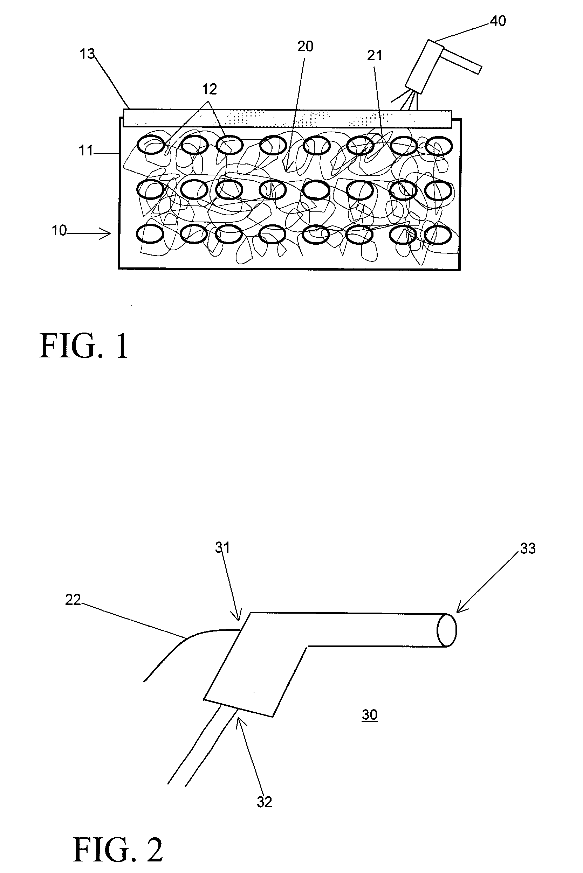

Les filaments sont projetés au moyen d'un tel appareil 30 visible à la figure 2, qui est muni d'au moins une entrée 31 d'alimentation d'une mèche composite 22 de filaments de verre et de matière thermoplastique, d'une entrée 32 pour l'arrivée d'air comprimé, et d'une sortie 33 d'expansion des filaments se présentant sous la forme d'une buse.

La mèche 22 est dévidée depuis un roving non illustré à l'aide de moyens de dévidage internes à l'appareil 30.

L'air comprimé est fourni par des moyens appropriés tels qu'un compresseur. Il est insufflé via l'entrée 32 sensiblement transversalement à l'arrivée de la mèche de sorte qu'il puisse à la fois séparer les filaments et les enchevêtrer. La pression de l'air est réglable de façon que la vitesse de l'air à son entrée dans l'appareil 30 soit supérieure à la vitesse de défilement de la mèche dans la buse pour assurer la séparation des filaments.

Après projection des filaments dans le logement 10, la surface externe 21 du volume 20 est chauffée à l'aide d'un moyen de chauffage 40 de manière à fondre partiellement la matière thermoplastique pour solidariser en superficie du volume les filaments enchevêtrés entre eux, ce qui crée une peau enveloppant et protégeant le volume 20.

Le moyen de chauffage 40 consiste en tout moyen de soufflage d'air chaud ou moyen de rayonnement thermique, ou en une flamme telle que celle d'une torche. Il opère rapidement de manière suffisante pour fondre la matière thermoplastique. Aussi, la température de chauffage doit être supérieure à la température de fusion de la matière thermoplastique, et la durée d'application des moyens de chauffage est de l'ordre de 1 à 20 secondes. Selon le moyen de chauffage utilisé, son extrémité sera placée entre 2 et 15 cm de la surface 21 du volume. Bien entendu, les chiffres de température, de durée et de la distance d'application du moyen de chauffage sont à adapter en fonction du type de volume considéré et du moyen de chauffage utilisé.

Il peut être souhaitable d'augmenter l'épaisseur de la peau enveloppant le volume 20, on prolongera alors judicieusement la durée du chauffage.

Il peut être envisagé de répéter plusieurs fois l'opération de projection puis l'opération de chauffage pour obtenir une pluralité de couches alternées de volume 20.

On peut également former un volume 20 dont le coeur est constitué de couches de filaments de verre pur projetés, et revêtu ou entouré de couches composites de filaments projetés de verre et de matière thermoplastique.

## Revendications

1. Produit à base de fibres composites continues expansées, les fibres consistant en des filaments de verre et en au moins une matière thermoplastique, **caractérisé en ce que** la matière thermoplastique permet d'assurer la fonction de liant et que les fibres sont issues d'un roving de filaments comêlés de verre et de matière thermoplastique.

2. Produit selon la revendication 1, **caractérisé en ce que** la matière thermoplastique est une polyoléfine du type polypropylène ou polyéthylène.

3. Produit selon la revendication 1, **caractérisé en ce que** la matière thermoplastique est un polyester thermoplastique du type polyéthylènetéréphtalate, ou polybutylènetéréphtalate.

4. Produit composite comprenant au moins un produit en fibres de verre expansées et une enveloppe enveloppant le produit en fibres de verre expansées, **caractérisé en ce que** l'enveloppe est constituée par le produit selon l'une des revendications 1 à 3.

5. Procédé d'obtention d'un produit selon l'une quelconque des revendications précédentes, consistant à projeter sous forme d'un volume (20) dans ou sur un élément de réception (10), des filaments à base de verre issus d'au moins une mèche continue, **caractérisé en ce que** les filaments projetés consistent en des filaments de verre et en au moins une matière thermoplastique, et **en ce que** le volume (20) est chauffé sur sa surface externe (21).

6. Procédé selon la revendication 5, **caractérisé en ce que** le chauffage est réalisé par soufflage d'air chaud à proximité de la surface externe (21) du volume (20).

7. Procédé selon la revendication 5 ou 6, **caractérisé en ce que** le chauffage est réalisé par rayonnement thermique à proximité de la surface externe (21) du volume (20).

8. Procédé selon la revendication 5 ou 6, **caractérisé en ce que** le chauffage est réalisé par une flamme disposée à proximité de la surface externe (21) du volume (20).

9. Procédé selon l'une quelconque des revendications 5 à 8, **caractérisé en ce que** l'élément de réception (10) présente une forme et des dimensions correspondant à celle du volume (20) à obtenir.

10. Procédé selon la revendication 9, **caractérisé en ce que** l'élément de réception (10) présente des parois (11) pourvues d'orifices (12) autorisant le passage d'air chaud pour le chauffage de la surface externe (21).

11. Procédé selon l'une quelconque des revendications 5 à 10, **caractérisé en ce qu'**une grille métallique (13) est appliquée contre la surface externe (21) du volume (20) lors de son chauffage.

12. Procédé selon l'une quelconque des revendications 5 à 10, **caractérisé en ce que** des filaments de verre supplémentaires issus d'une seconde mèche sont projetés avec les filaments de verre et de matière thermoplastique issus d'une première mèche composite.
